# EUROPEAN PATENT SPECIFICATION

(11) **EP 3 175 699 B1**
(45) Date of publication and mention of the grant of the patent: **06.02.2019**
(21) Application number: 15197215.5
(22) Date of filing: 01.12.2015
(51) Int. Cl.: A01D 43/073

(54) **HARVESTER DISPLAY SYSTEM**
ERNTEMASCHINENANZEIGESYSTEM
SYSTÈME D'AFFICHAGE DE MOISSONNEUSE

(43) Date of publication of application: 07.06.2017
(73) Proprietor: AGCO International GmbH, 8212 Neuhausen am Rheinfall (CH)
(72) Inventor: Eisenblätter, Jochen, 87616 Marktoberdorf (DE); Uhl, Markus, 87616 Marktoberdorf (DE)
(74) Representative: AGCO Intellectual Property Department

(56) References cited:
- EP-A1- 2 020 174
- US-A1- 2003 174 207
- US-A1- 2013 211 658

## Description

The present invention relates to a display system in connection with an image capturing device, such as a camera, for facilitating the unloading of harvested crop material from a harvesting machine, such as a forage harvester, to a separate material receiving vehicle, such as a tractor and trailer accompanying the harvesting machine.

To facilitate unloading whilst continuing to harvest, harvesting machines such as combines and forage harvesters are provided with a discharge spout that is controllably movable relative to the harvester by hydraulic and/or mechanical actuators, optionally in conjunction with an adjustable deflector flap at the discharge end of the spout, by use of which the discharge stream may be directed towards a receiving vehicle accompanying the harvester. Modern forage harvesters are equipped with a camera mounted on the spout and directed towards an area where the crop can be discharged. A display presents the pictures to the driver to assist the manual control of spout/flap position during unloading.

Increasingly, automatic overloading systems are provided, having means to recognize the loading vehicle/reservoir and automatically fill the container by moving the spout to give an even fill level between the detected borders of the container. One example of such an automatic system is described in United States patent US 6,943,824 B2 which discloses a spout control system which controls and aims a spout and deflector flap of a crop harvesting vehicle with respect to a separate crop loading vehicle moving with the harvesting vehicle. The control system includes a video camera which is mounted on the flap and which views a field of view which includes a portion of the loading vehicle. An image signal generated by the camera is received by an image processing unit. The image processing unit processes a digitized form of the image signal and automatically generates spout and flap control signals as a function thereof. Actuators automatically aim the spout and the flap in response to the control signal.

Problems arise as automatic systems require expensive camera or ranging systems (such as time-of-flight range imaging camera systems or 3-dimensional laser scanners) able to work under rough conditions.

Although cheaper and more robust, camera systems used in manual unloading control systems have the major disadvantage that the pick-up area is fixed so that depending on the harvesting condition, the picture shown may not be suitable to enable the driver to control the spout precisely. Especially during headland turns or when harvester and loading vehicle change their relative position, it often happens that the driver is not tracking this position change in the pick-up area and when starting harvesting, the crop is thrown beside the loading container, or directly onto the tractor hauling it. This results in crop losses and safety issues.

It is an object of the present invention to mitigate at least some of the above problems.

United States Patent Application US 2013/0211658 describes a stereo vision display system for facilitating user-controlled aiming of a movable crop-delivery spout of a harvesting vehicle with respect to a separate material receiving vehicle. The described system comprises an image device for viewing a field of view including at least a portion of the material receiving vehicle and arranged to generate an image signal, and a display device arranged to display to a user of the harvesting vehicle an image based on said image signal, with the image device being operable to adjust a viewed field of view by movement of the crop delivery spout.

In accordance with the present invention there is provided a harvesting vehicle including a display system for facilitating user-controlled aiming of a movable crop-delivery spout of the harvesting vehicle with respect to a separate material receiving vehicle, the system comprising:
- an image device for viewing a field of view including at least a portion of the material receiving vehicle and arranged to generate an image signal;
- a display device arranged to display to a user of the harvesting vehicle an image based on said image signal;
wherein the image device is operable to adjust a viewed field of view by a controlled adjustment extent;
position determining means arranged to generate an indication of the position of the crop delivery spout relative to the harvesting vehicle, and a control unit coupled to the image device and position determining means and arranged to automatically vary the adjustment extent in response to the spout position indication;
characterised in that the image device is a camera and adjustment of a viewed field of view is achieved by adjustment of a zoom function of the camera.

By automatically adjusting the field of view (pick-up area), operator errors due to the presentation of an unsuitable image are reduced.

Additionally, the image device may be movably mounted to the harvesting vehicle by an actuator coupled with and controlled by said control unit, with the adjustment extent being at least partially controlled by an extent of actuator operation, so an optimised image may be generated by zooming or moving a camera to show the target area for the crop discharge in as much detail as possible.

The image device may support two or more adjustment extents with each being associated with a respective range of delivery spout positions.

The adjustment extent variation may be further determined by the relative positions of the harvesting vehicle and a target point of harvested crop discharge from the delivery spout. In such an arrangement, the target point may be determined by measuring a current spout position to determine a crop discharge path and generating an intersection point for said path with a plane offset from a ground level. The extent of offset from ground level of the intersected plane may be determined by a height above ground level of the separate material receiving vehicle and/or user-operable input means may be provided by operation of which a user enters a value representing the said extent of offset from a ground level.

User-operable control means may be provided to enable a control unit adjustment extent variation to be over-ridden by a user selected variation. In one preferred embodiment, the control unit transitions in graduated manner from one extent variation to another, and the user is enabled to stop the transition at any point between extents.

Further features and advantages will become apparent from reading the following description of embodiments of the present invention now described, by way of example only, and with reference to the accompanying drawings in which:
Figure 1 is a side elevation of a forage harvester and unloading tractor/trailer combination;
Figure 2 is a plan schematic representing a forage harvester and unloading tractor/trailer combination operating in line astern (Fig. 2a) and parallel (Fig. 2b) modes;
Figure 3 represents an image of the unloading tractor/trailer combination presented to the user of the forage harvester; and
Figures 4a to 4d represent further images of the unloading tractor/trailer combination presented to the user of the forage harvester.

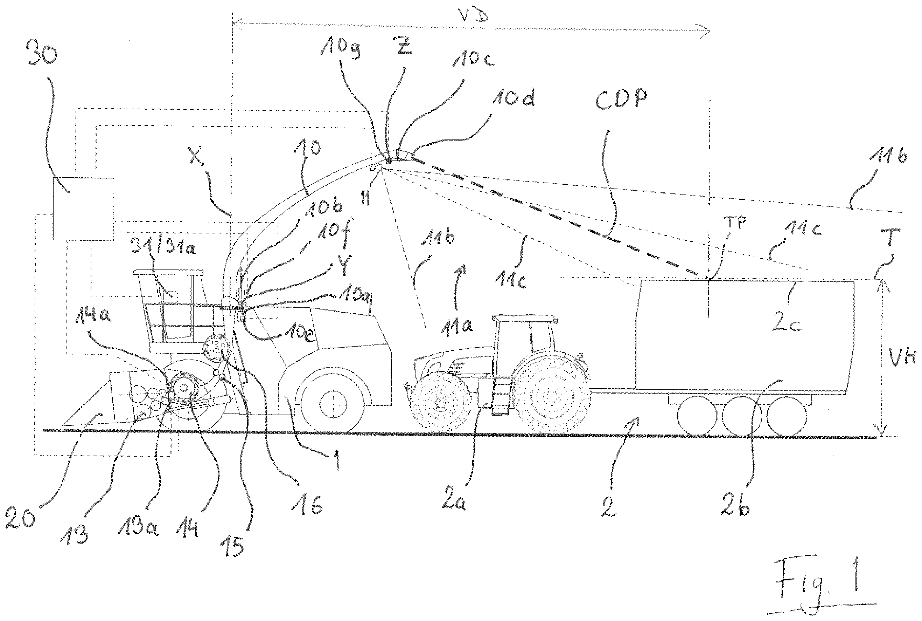

Figure 1 shows a side view with a forage harvester 1 followed by a vehicle combination 2 including a tractor 2a and a container/transport trailer 2b for overloading harvested crop. The forage harvester 1 is provided with a header 20 to cut and/or collect the crop, e.g. maize or grass. The crop is then fed into the processing means of forage harvester via intake system 13. Processing means further contains a chopper drum 14 to chop the crop against a shear bar. After chopping, the crop, in the case of maize, is worked by cracker unit 15. In the case of grass, the cracker unit 15 would be taken out of the crop flow and replaced by a simple duct (not shown). The worked crop is then transported by accelerator 16 to the spout 10.

The spout 10 is equipped with various drives to adjust spout position:
▪ First spout drive 10a (in the form of a rotating hydraulic motor) pivots the spout about a generally vertical axis X.
▪ Second spout drive 10b (in form of an hydraulic ram) pivots the spout 10 about a generally horizontal axis Y being at right angle to axis X.
▪ Third drive 10c (in form of an hydraulic ram) moving a deflection flap 10d of spout 10 about a horizontal axis Z.

Further details of spout construction and operation are given in the commonly-assigned International patent application WO2012/022564.

Each of spout drives 10a, 10b, 10c is equipped with sensors 10e, 10f, 10g to measure the current angle/position.

To ease unloading, forage harvesters are equipped with a camera 11 attached to spout 10 which shows the area 11a behind the spout. The camera 11 is also connected to a vehicle control unit 30 forwarding the pictures to a human machine interface 31 consisting of a display 31a and input devices (not shown).

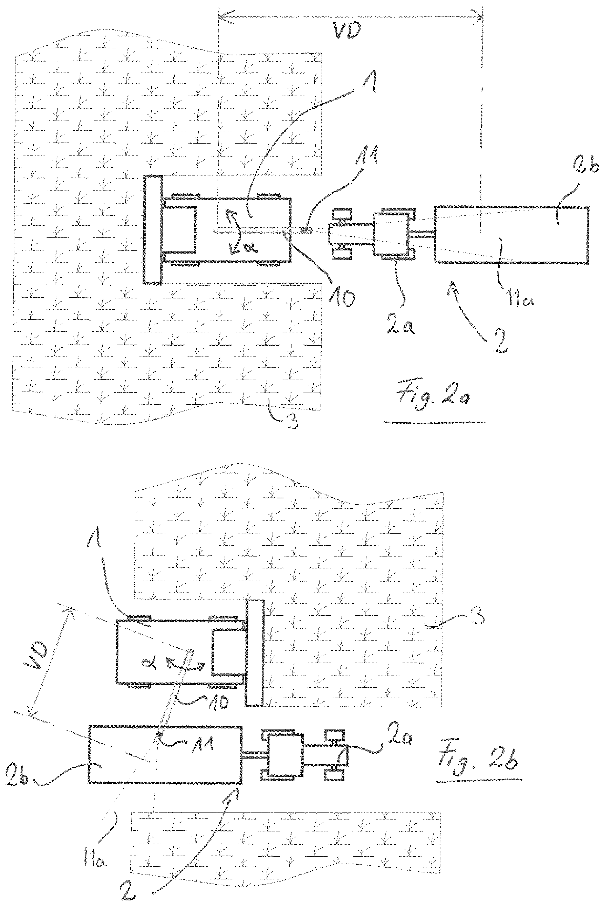

The camera 11 is provided with a pick-up area (field of view) indicated in Fig. 1 by long-dashed lines 11b which covers a wide area behind the forage harvester 1. Short-dashed lines 11c show the "ideal" pick-up area focused on the container/transport trailer 2b but due to the different operating modes (Follow Mode and Parallel Mode) the pick-up area of camera 11 must be wider than the ideal in this case. These operational modes are explained with Figure 2a and 2b:

Figure 2a shows a forage harvester 1 harvesting crop material 3 and followed by a vehicle combination 2 including tractor 2a and container/transport trailer 2b for receiving unloaded harvested crop. This mode of unloading is referred to as "Follow Mode".

Figure 2b shows the forage harvester 1 and vehicle combination 2 (including tractor 2a and container/transport trailer 2b) with the vehicle driving alongside the harvester. This mode of unloading is referred to as "Parallel Mode".

It is evident from Figures 2a and 2b that the distance from the harvester 1 to container/transport trailer 2b is different for Follow Mode and Parallel Mode.

If, during harvesting operation, these modes are changed, the harvester driver has to adjust the discharge spout 10 to avoid that crop is discharged beside the container/transport trailer 2b and, in case of Follow Mode, that the crop is thrown on tractor 2a instead. Therefore, camera 11 and display 31a is provided so that the driver can guide the spout 10 to the areas in which the crop should be discharged.

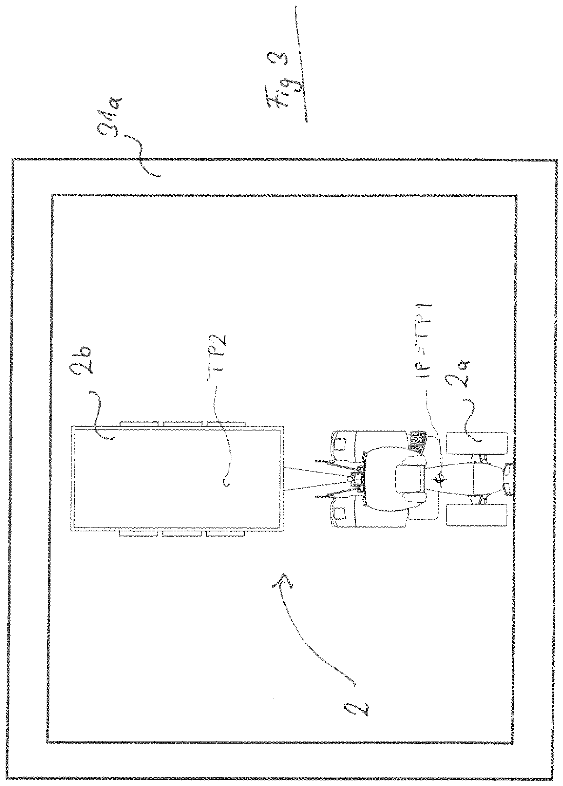

Figure 3 shows display 31a providing a camera picture taken from camera 11 in Follow Mode. In practice, this camera picture would show a distorted, tilted three-dimensional view of the scenery behind the forage harvester 1. The picture presented herewith is simplified to a top view for better clarity and shows tractor 2a and container/transport trailer 2b.

As can be seen, the picture is showing a scene which is larger than the area the operator would like to focus on as explained with reference to Figure 1. Accordingly, a display system is provided in which the camera is adjusted in terms of zoom or relative position to the spout or harvester (depending on spout position). The zoom or relative position is accordingly adjusted depending on the spout position. In a simplified determination, the adjustment of camera 11 may only be adjusted depending on the angle α of first spout drive 10a which pivots the spout about a generally vertical axis X (see Figure 2a).

An angle α close to zero (α is zero when the spout is aligned with driving direction) indicates that unloading is done in Follow Mode so that the container/transport trailer 2b is at a larger distance than for Parallel Mode. In this case the system automatically adjusts zoom and/or position of the camera to focus the shown picture on a pick-up area far behind the forage harvester and optimised with regard to the position of the container/transport trailer 2b. If the spout is pivoted to an angle α indicating Parallel Mode, the camera is adjusted to take a pick-up area closer to the harvester.

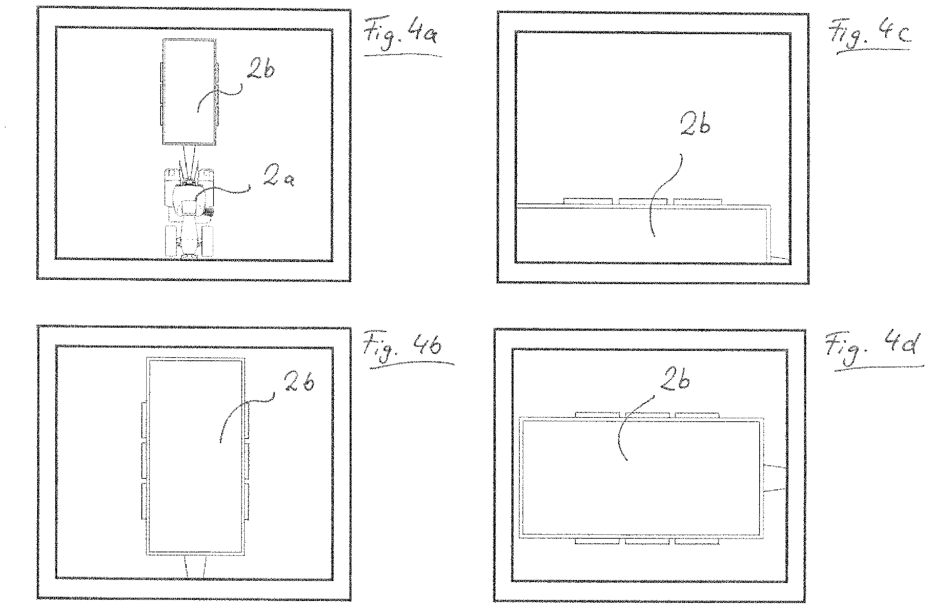

Figures 4a to 4d show pictures presented to the driver from the camera in different modes. Figure 4a shows a camera picture taken in Follow Mode with an inadequate level of detail in the camera picture, as the shown area is large and depicts a large proportion of area not of interest. With the invention, the system may recognize (from angle α) that the harvesting is in Follow Mode and change the adjustment of the camera so that picture 4b is shown, which picture is more closely focused on the container.

If the harvesting process now changes to the Parallel Mode, a picture according to Figure 4c would be shown as the camera is still adjusted for longer distances. As a consequence, the driver would not be able to see the complete trailer, and accurate unloading would be impossible. With the invention, the system may detect the change to Parallel Mode (by measuring the operating parameter data that is angle α) and readjust the camera to settings suitable for this mode so that a picture according to Figure 4d would be shown for comfortable unloading. The adjustment of the camera for the two modes is stored on the vehicle control unit 30 and may be adapted by the operator.

A more precise adjustment of the camera may be provided by calculating a target point TP for the impact of the discharged crop, as shown in Figure 1. The vehicle control unit 30 calculates a target point TP on a plane T offset above ground level and generally parallel thereto. This is necessary as the crop discharge path (CDP) is inclined to the top surface of the container defining the opening in which the crop must be discharged.

The signals from the sensors 10e, 10f, 10g of the spout drives 10a, 10b, 10c are taken to determine a crop discharge path (CDP) and an intersection point with a virtual height VH is calculated to get target point TP. The value for virtual height VH can be fixed representing an average value of say 3,5 metres above ground or can be entered by the driver depending on the trailer attached.

As mentioned above, the crop discharge path (CDP) may not be a straight line only depending on the spout position but may also be influenced by the harvesting and crop condition. Various parameters of crop discharge characteristic data may be taken to correct or enhance the accuracy of the crop discharge path (CDP) depending on crop flow:
▪ The angle of the intake system 13 (angle between upper and lower rollers) determined by sensor 13a may be used to determine mass flow of the crop. The wider the angle, the more crop is taken in as the intake width is fixed.
▪ The speed of the intake system 13 determined by sensor 14a indicates the length of the crop which also has an influence on the crop discharge path (CDP).
▪ Further sensors analysing crop humidity or crop composition may give additional indications to amend the crop discharge path (CDP).
Having the target point TP, the adjustment of the camera 11 can be done by focusing or moving on the target point TP rather than the pivot angle α of the spout.

Both methods are based on the concept that the focus or the relative position of the camera are adapted to a virtual distance VD (as shown in Figure 1, 2a and 2b) between a reference on the forage harvester and a point on which the crop is discharged. In the first case, the virtual distance VD is changed depending on the pivot angle α while the second method calculates the virtual distance VD.

In the described embodiment, the system automatically adjusts the camera without any delay. Alternatively, the system may start the adjustment (slowly) and the operator may input a command to stop when a desired level of image detail is obtained. For example, when the system detects a transition from Parallel Mode to Follow Mode, the system could slowly start to zoom/pivot towards the longer distance and the operator may stop when he agrees with the pick-up area.

The camera adjustment can also be disabled by a command of the driver, or it may be done automatically if the harvester is not in harvesting mode.

In the foregoing the applicant has described a display system for a harvesting machine including a display, an adjustable spout and a camera or other image device. The camera position relative to harvester or spout and/or the zoom of the camera can be adjusted by said system at least semi-automatically, suitably in dependence on spout position.

## Claims

1. A harvesting vehicle including a display system for facilitating user-controlled aiming of a movable crop-delivery spout (10) of the harvesting vehicle (1) with respect to a separate material receiving vehicle (2a, 2b), the system comprising:
an image device (11) for viewing a field of view including at least a portion of the material receiving vehicle (2b) and arranged to generate an image signal;
a display device (31a) arranged to display to a user of the harvesting vehicle an image based on said image signal;
wherein the image device (11) is operable to adjust a viewed field of view by a controlled adjustment extent;
position determining means (10e, f, g) arranged to generate an indication of the position of the crop delivery spout (10) relative to the harvesting vehicle (1), and a control unit (30) coupled to the image device and position determining means and arranged to automatically vary the adjustment extent in response to the spout position indication;
wherein the image device (11) is a camera; **characterised in that** adjustment of the viewed field of view is achieved by adjustment of a zoom function of the camera.

2. A harvesting vehicle including a display system as claimed in claim 1, wherein the image device (11) is movably mounted to the harvesting vehicle (1) by an actuator coupled with and controlled by said control unit (30), with the adjustment extent being at least partially controlled by an extent of actuator operation.

3. A harvesting vehicle including a display system as claimed in claim 1 or claim 2, wherein the image device (11) supports two or more adjustment extents with each being associated with a respective range of delivery spout positions.

4. A harvesting vehicle including a display system as claimed in claim 1 or claim 2, wherein the control unit (30) is configured to further determine the adjustment extent variation by the relative positions of the harvesting vehicle (1) and a target point (TP) of harvested crop discharge from the delivery spout.

5. A harvesting vehicle including a display system as claimed in claim 4, wherein the control unit (30) is configured to determine the target point (TP) by measuring a current spout position to determine a crop discharge path (CDP) and generate an intersection point for said path with a plane (T) offset from a ground level.

6. A harvesting vehicle including a display system as claimed in claim 5, wherein the control unit (30) is configured to determine the extent of offset (VH) from a ground level of the intersected plane (T) as a height above ground level of the separate material receiving vehicle (2b).

7. A harvesting vehicle including a display system as claimed in claim 5 or claim 6, further comprising user-operable input means (31a) by operation of which a user may enter a value representing the said extent of offset (VH) from a ground level.

8. A harvesting vehicle including a display system as claimed in claim 1, further comprising user-operable control means (31a) by operation of which a control unit adjustment extent variation may be over-ridden by a user selected variation.

9. A harvesting vehicle including a display system as claimed in claim 8, wherein the control unit (30) control unit (30) is configured to transition in graduated manner from one extent variation to another, and the user is enabled to stop the transition at any point between extents.

## Patentansprüche

1. Erntefahrzeug mit einem Anzeigesystem zum Vereinfachen des benutzergesteuerten Ausrichtens einer beweglichen Erntegut-Ausgabetülle (10) des Erntefahrzeugs (1) zu einem getrenntes Material aufnehmenden Fahrzeug (2a, 2b), mit:
einer Bildvorrichtung (11) zum Betrachten eines Blickfelds, das mindestens einen Teil des Material aufnehmenden Fahrzeugs (2b) beinhaltet, und die dazu angeordnet ist, ein Bildsignal zu erzeugen;
einer Anzeigevorrichtung (31a), die dazu angeordnet ist, einem Benutzer des Erntefahrzeugs ein auf dem Bildsignal basierendes Bild anzuzeigen;
wobei die Bildvorrichtung (11) dazu betreibbar ist, ein betrachtetes Blickfeld in einem gesteuerten und/oder geregelten Anpassungsausmaß anzupassen;
einem Positionsbestimmungsmittel (10e, f, g), das dazu angeordnet ist, ein Anzeigen der Position der Erntegut-Ausgabetülle (10) relativ zu dem Erntefahrzeug (1) zu erzeugen, und einer Steuer-/Regeleinheit (30), die an die Einwickelvorrichtung und das Positionsbestimmungsmittel angekoppelt und dazu angeordnet ist, automatisch das Anpassungsausmaß in Antwort auf die Tüllenpositionsanzeige zu variieren;
wobei die Bildvorrichtung (11) eine Kamera ist; **dadurch gekennzeichnet, dass**
das Anpassen des betrachteten Blickfelds durch Anpassen einer Zoomfunktion der Kamera erreicht wird.

2. Erntefahrzeug mit einem Anzeigesystem nach Anspruch 1, wobei die Bildvorrichtung (11) durch einen Aktuator, der mit der Steuer-/Regeleinheit (30) gekoppelt ist und von dieser gesteuert/geregelt wird, beweglich an dem Erntefahrzeug (1) montiert ist, wobei das Anpassungsausmaß wenigstens teilweise durch ein Ausmaß des Aktuatorbetriebs gesteuert/geregelt wird.

3. Erntefahrzeug mit einem Anzeigesystem nach Anspruch 1 oder Anspruch 2, wobei die Bildvorrichtung (11) zwei oder mehr Anpassungsausmaße unterstützt, wobei jedes mit einem jeweiligen Bereich von Ausgabetüllen-Positionen verbunden ist.

4. Erntefahrzeug mit einem Anzeigesystem nach Anspruch 1 oder Anspruch 2, wobei die Steuer-/Regeleinheit (30) dazu eingerichtet ist, weiterhin die Anpassungsausmaß-Variation anhand der relativen Positionen des Erntefahrzeugs (1) und eines Zielpunkts (TP) eines Austritts von geerntetem Erntegut aus der Ausgabetülle zu bestimmen.

5. Erntefahrzeug mit einem Anzeigesystem nach Anspruch 4, wobei die Steuer-/Regeleinheit (30) dazu angeordnet ist, den Zielpunkt (TP) durch Messen einer aktuellen Tüllenposition zum Bestimmen eines Erntegutaustrittswegs (CDP) zu bestimmen und einen Schnittpunkt für den Weg mit einer zu einem Bodenniveau versetzten Ebene (T) zu erzeugen.

6. Erntefahrzeug mit einem Anzeigesystem nach Anspruch 5, wobei die Steuer-/Regeleinheit (30) dazu eingerichtet ist, das Ausmaß des Versatzes (VH) der schneidenden Ebene (T) zu einem Bodenniveau als eine Höhe über dem Boden des getrennten materialaufnehmenden Fahrzeugs (2b) zu bestimmen.

7. Erntefahrzeug mit einem Anzeigesystem nach Anspruch 5 oder Anspruch 6, weiterhin mit einem durch den Benutzer bedienbaren Eingabemittel (31a), durch dessen Betätigung ein Benutzer einen das Ausmaß des Versatzes (VH) zu einem Bodenniveau repräsentierenden Wert eingeben kann.

8. Erntefahrzeug mit einem Anzeigesystem nach Anspruch 1, weiterhin mit einem durch den Benutzer bedienbaren Steuer- und/oder Regelmittel (31a), durch dessen Betätigung eine Steuer- und/oder Regeleinheits-Anpassungsausmaßvariation durch eine benutzerausgewählte Variation überschrieben werden kann.

9. Erntefahrzeug mit einem Anzeigesystem nach Anspruch 8, wobei die Steuer-/Regeleinheit (30) dazu eingerichtet ist, in gradueller Weise von einer Ausmaßvariation zu einer anderen überzugehen, und der Benutzer dazu in die Lage versetzt ist, den Übergang an jedem Punkt zwischen Ausmaßen zu stoppen.

## Revendications

1. Moissonneuse comportant un dispositif d'affichage destiné à faciliter l'orientation commandée par l'utilisateur d'un orifice de distribution de récolte mobile (10) de la moissonneuse (1) par rapport à un véhicule de réception de matériau séparé (2a, 2b), le dispositif comprenant :
un dispositif de formation d'image (11) destiné à visualiser un champ de vision comportant au moins une partie du véhicule de réception de matériau (2b) et agencé afin de produire un signal d'image ;
un dispositif d'affichage (31a) agencé afin d'afficher, à un utilisateur de la moissonneuse, une image sur la base dudit signal d'image ;
dans laquelle le dispositif de formation d'image (11) peut être commandé afin d'ajuster un champ de vision visualisé sur une plage de réglage commandée ;
un moyen de détermination de position (10e, 10f, 10g) agencé afin de produire une indication de la position de l'orifice de distribution de récolte (10) par rapport à la moissonneuse (1), et une unité de commande (30) couplée aux dispositif de formation d'image et moyen de détermination de position et agencée de manière à faire varier automatiquement la plage de réglage en réponse à l'indication de position de l'orifice ;
dans laquelle le dispositif de formation d'image (11) est une caméra ; **caractérisée en ce que** le réglage du champ de vision visualisé est obtenu par ajustement d'une fonction de zoom de la caméra.

2. Moissonneuse comportant un dispositif d'affichage selon la revendication 1, dans laquelle le dispositif de formation d'image (11) est monté de manière à pouvoir se déplacer sur la moissonneuse (1) par un actionneur couplé à ladite unité de commande (30) et commandé par celle-ci, la plage de réglage étant commandée au moins partiellement par une plage de fonctionnement d'actionneur.

3. Moissonneuse comportant un dispositif d'affichage selon la revendication 1 ou 2, dans laquelle le dispositif de formation d'image (11) supporte deux ou plusieurs plages de réglage, chacune étant associée à une plage de positions d'orifice de distribution respective.

4. Moissonneuse comportant un dispositif d'affichage selon la revendication 1 ou 2, dans laquelle l'unité de commande (30) est configurée de manière à déterminer, en outre, la variation de plage de réglage par les positions relatives de la moissonneuse (1) et d'un point de cible (TP) de décharge de récolte moissonnée à partir de l'orifice de distribution.

5. Moissonneuse comportant un dispositif d'affichage selon la revendication 4, dans laquelle l'unité de commande (30) est configurée de manière à déterminer le point de cible (TP) en mesurant une position d'orifice courante afin de déterminer un trajet de déchargement de récolte (CDP) et d'obtenir un point d'intersection pour ledit trajet avec un plan (T) décalé par rapport à un niveau du sol.

6. Moissonneuse comportant un dispositif d'affichage selon la revendication 5, dans laquelle l'unité de commande (30) est configurée de manière à déterminer la valeur du décalage (VH) par rapport à un niveau du sol du plan coupé (T) comme une hauteur au-dessus du niveau du sol du véhicule de réception de matériau séparé (2b).

7. Moissonneuse comportant un dispositif d'affichage selon la revendication 5 ou 6, comprenant, en outre, un moyen d'entrée pouvant être activé par l'utilisateur (31a) par l'activation duquel un utilisateur peut entrer une valeur représentant ladite valeur de décalage (VH) par rapport à un niveau du sol.

8. Moissonneuse comportant un dispositif d'affichage selon la revendication 1, comprenant, en outre, un moyen de commande pouvant être activé par l'utilisateur (31a) par l'activation duquel une variation de plage de réglage d'unité de commande peut être remplacée par une variation sélectionnée par l'utilisateur.

9. Moissonneuse comportant un dispositif d'affichage selon la revendication 8, dans laquelle l'unité de commande (30) unité de commande (30) est configurée afin d'assurer une transition de manière progressive à partir d'une variation de plage vers une autre, et l'utilisateur est autorisé à arrêter la transition à un point quelconque entre plages.
